# EUROPÄISCHE PATENTSCHRIFT

(11) **EP 2 303 623 B1**
(45) Veröffentlichungstag und Bekanntmachung des Hinweises auf die Patenterteilung: **21.12.2011**
(21) Anmeldenummer: 10724721.5
(22) Anmeldetag: 16.06.2010
(51) Int. Cl.: B60K 1/04

(54) **DACHMODUL**
ROOF MODULE
MODULE DE TOIT

(30) Priorität: 31.07.2009 DE 102009035860
(43) Veröffentlichungstag der Anmeldung: 06.04.2011
(73) Patentinhaber: Voith Patent GmbH, 89522 Heidenheim (DE)
(72) Erfinder: RÖSSEL, Conrad, 89428 Syrgenstein (DE)
(74) Vertreter: Dr. Weitzel & Partner
(86) Internationale Anmeldenummer: PCT/EP2010/003603
(87) Internationale Veröffentlichungsnummer: WO 2011/012188

(56) Entgegenhaltungen:
- DE-A1- 19 832 873
- US-A1- 2007 215 398
- US-A1- 2008 277 173

## Beschreibung

Die Erfindung betrifft ein Dachmodul zur Montage auf einem Fahrzeugdach, nach der im Oberbegriff von Anspruch 1 näher definierten Art.

Prinzipiell ist es aus dem Stand der Technik bekannt, funktionelle Komponenten im Dachbereich von Fahrzeugen, und hier insbesondere von Nutzfahrzeugen oder Bussen, anzuordnen. Beispielhaft wird hierzu auf die DE 10 2005 028 853 A1 verwiesen, welche ein Dach für ein Nutzfahrzeug, insbesondere einen Omnibus, zeigt, wobei in das Dach eine Funktionseinheit integriert ist, welche elektrische Komponententeile einer Brennstoffzellenanlage oder Einrichtungen zur Brandbekämpfung aufweisen kann.

Ein Dachmodul nach dem Oberbegriff des Anspruchs 1 ist aus US 2007 0215398 bekannt.

Aus der DE 103 50 177 A1 ist ferner ein Dachmodul für ein Fahrzeug mit integrierter Klimaanlage bekannt. Neben der Klimaanlage ist es vorgesehen, dass in dem Dachmodul außerdem ein Brennstoffzellensystem angeordnet wird. Das beschriebene Dachmodul kann dabei als komplett vormontiertes Fahrzeugdach mit angrenzenden Baugruppen ausgebildet sein. Es umfasst insbesondere eine tragende Dachstruktur, welche bei der Endmontage auf das Fahrzeug als Ganzes aufgesetzt werden kann.

Damit ist die Flexibilität beim Einsatz für verschiedene Fahrzeuge stark eingeschränkt, da durch die als Ganzes vormontierte Dachstruktur des Dachmoduls eine entsprechende Einschränkung auf das jeweils passende Fahrzeug gegeben ist. Sollen unterschiedliche Fahrzeuge mit Dachmodulen ausgestattet werden, so sind verschiedene Dachmodule für die einzelnen Fahrzeugtypen notwendig, was das Dachmodul aufwendig und teuer macht.

Ein weiterer Nachteil von Dachmodulen, welche elektrische Komponenten umfassen, liegt außerdem in der Tatsache, dass Passagiere eines Fahrzeugs, insbesondere bei einem Personenkraftwagen oder Omnibus, vergleichsweise dicht an den elektronischen Komponenten des Dachmoduls sitzen, da diese direkt über den Passagieren angeordnet sind. Aufgrund von elektromagnetischen Strahlungen können so die Personen belastet werden und in dem Fahrzeug angebrachte Elektronikbauteile können aufgrund der im Dachmodul verbauten elektrischen und/oder elektronischen Komponenten gestört werden.

Es ist daher die Aufgabe der hier vorliegenden Erfindung, ein funktionales Dachmodul zu schaffen, welches hinsichtlich seiner Stabilität und der elektromagnetischen Verträglichkeit (EMV) einen optimalen Aufbau gewährleistet.

Erfindungsgemäß wird diese Aufgabe durch ein Dachmodul mit den Merkmalen im kennzeichnenden Teil des Anspruchs 1 gelöst. Vorteilhafte Ausgestaltungen und Weiterbildungen des Dachmoduls ergeben sich dabei aus den abhängigen Unteransprüchen.

Die Komponenten in dem erfindungsgemäßen Dachmodul umfassen in jedem Fall elektrische Energiespeichermodule. Zwischen diesen elektrischen Energiespeichermodulen und dem Fahrzeugdach ist dabei erfindungsgemäß ein Abschirmblech an dem Tragrahmen angeordnet. Dieses Abschirmblech, welches selbst nicht tragend ausgebildet ist, kann bevorzugt als verzinktes Blechteil ausgebildet sein. Es schirmt die Komponenten auf dem Tragrahmen des Dachmoduls gegenüber dem Fahrzeugdach und damit gegenüber Personen und elektronischen Bauteilen in dem Fahrzeug ab. Damit entsteht ein sehr einfacher und kompakter Aufbau, welcher hinsichtlich der elektromagnetischen Verträglichkeit in der Zusammenwirkung mit dem Fahrzeug beziehungsweise mit in dem Fahrzeug angeordneten Elektronikkomponenten und/oder mitfahrenden Personen unkritisch ist. Durch den Tragrahmen, welcher das Dachmodul selbst tragend stützt, wird außerdem ein Aufbau erreicht, welcher eine hohe Flexibilität bei der Montage des Dachmoduls auf verschiedenen Fahrzeugen zeigt. Insbesondere kann das Dachmodul so ausgebildet sein, dass es über standardisierte Abstände von Anschlusselementen verfügt, sodass es beispielsweise auf verschiedene Fahrzeuge, insbesondere verschiedene Omnibusse eines Herstellers, entsprechend angepasst werden kann, wenn diese im Dachbereich im vergleichbaren Abstand jeweils Befestigungselemente aufweisen. Durch den Tragrahmen kann auch eine gewisse Flexibilität bei der Form des Fahrzeugdachs erzielt werden, da dieser über entsprechende Längs- und Querstreben so ausgebildet werden kann, dass ein gewisser Abstand zum Dach gewährleistet bleibt, sodass unterschiedliche Krümmungen des Fahrzeugdachs unter dem auf diesen montierten Dachmodul möglich sind.

Das Abschirmblech, welches wie bei Abschirmblechen üblich mit der Masse der elektronischen Komponenten in dem Dachmodul verbunden ist, stellt dabei die Abschirmung in jedem Fall sicher, unabhängig von Material und Ausgestaltung des unter dem Dachmodul angeordneten Fahrzeugdachs.

In einer weiteren sehr günstigen und vorteilhaften Ausgestaltung des erfindungsgemäßen Dachmoduls ist es ferner vorgesehen, dass dieses einen elektrischer Speicher für einen Hybridantrieb des Fahrzeugs umfasst ist. Diese Ausbildung des Dachmoduls als elektrischer Speicher für ein Fahrzeug sollte dabei neben den bereits erwähnten elektrischen Speichermodulen, welche beispielsweise in Form von Batterien oder Supercaps ausgebildet sein können, auch die entsprechenden Bauteile der Leistungselektronik sowie einen Umrichter mit umfassen. Damit entsteht ein im Wesentlichen autark arbeitender elektrischer Speicher, wie er beispielsweise bei Hybridantrieben, insbesondere Diesel-Elektro-Hybriden in Nutzfahrzeugen, insbesondere in Omnibussen, eingesetzt werden kann. Bevorzugt soll das gesamte Dachmodul lediglich dieser elektrische Speicher sein.

In einer weiteren sehr günstigen Ausgestaltung des erfindungsgemäßen Dachmoduls ist es ferner vorgesehen, dass elektrische Leitungselemente zu und von den Komponenten jeweils dicht nebeneinander angeordnet sind. Diese dicht nebeneinander liegenden Leitungselemente, welche Strom in die eine und daneben in die andere Richtung leiten, emittieren so keine oder nur eine minimale Strahlung.

Weitere vorteilhafte Ausgestaltungen des erfindungsgemäßen Dachmoduls ergeben sich aus den restlichen abhängigen Unteransprüchen und werden anhand des Ausführungsbeispiels deutlich, welches nachfolgend unter Bezugnahme auf die Figuren näher erläutert wird.

Es zeigen:
- Figur 1: eine schematische Ansicht eines Omnibus als Fahrzeug;
- Figur 2: eine schematische Darstellung des Hybridantriebs des Omnibus 1;
- Figur 3: eine Frontansicht eines Dachmoduls auf einem Fahrzeugdach; und
- Figur 4: eine Draufsicht auf ein Dachmodul gemäß der Erfindung.

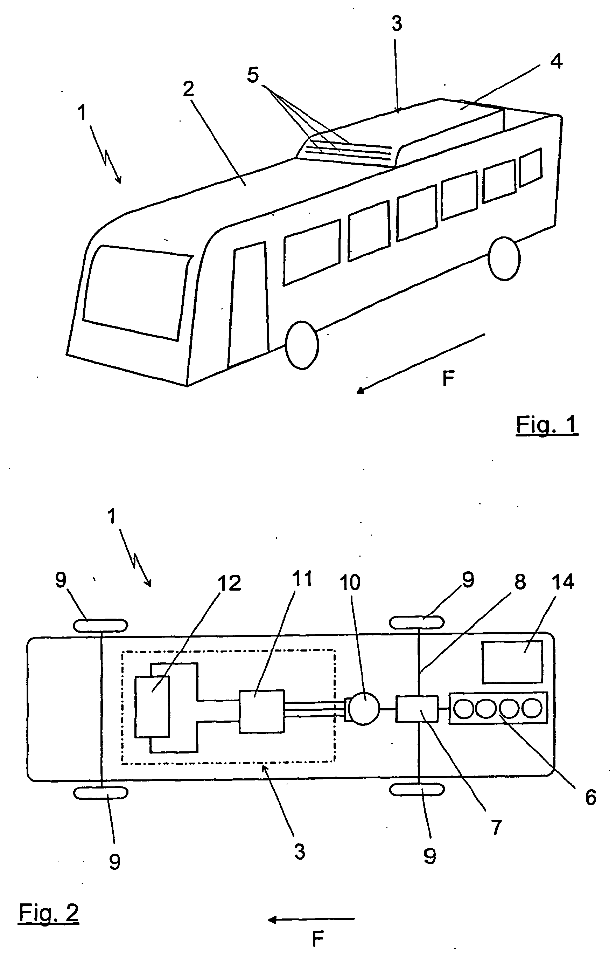

In der Darstellung der Figur 1 ist ein sehr stark schematisierter Omnibus 1 als Fahrzeug zu erkennen. Dieser Omnibus 1 weist auf seinem Fahrzeugdach 2 in einem in Fahrtrichtung F hinten liegenden Bereich ein Dachmodul 3 auf. Dieses Dachmodul ist in der Darstellung der Figur 1 über eine Abdeckhaube 4 abgedeckt, wobei Farbe und Form der Abdeckhaube 4 typischerweise mit dem Design des Omnibus 1 entsprechend abgestimmt sind. Die Abdeckhaube 4 weist in dem hier dargestellten Ausführungsbeispiel des Dachmoduls 3 außerdem Lüftungsschlitze 5 auf, auf welche später noch näher eingegangen werden wird. Der Omnibus 1 soll in dem hier dargestellten Ausführungsbeispiel als Omnibus 1 mit einem Hybridantrieb, insbesondere einem Diesel-Elektro-Hybrid ausgestattet sein. Wie es bei Omnibussen 1 sehr häufig üblich ist, ist dazu im in Fahrtrichtung F hinteren Bereich des Omnibus 1 ein Antriebsmotor 6 in Form eines Dieselmotors angeordnet. Dieser treibt, wie es in Figur 2 zu erkennen ist, über eine Getriebeeinheit 7 und eine angetriebene Achse 8 des Omnibus 1 zwei Räder 9 und damit den Omnibus 1 an. Außerdem verfügt der Omnibus 1 über einen elektrischen Fahrmotor 10, welcher zusammen mit dem Dieselmotor 6 über die Getriebeeinheit 7 auf die angetriebene Achse 8 des Omnibus 1 wirkt. Der elektrische Fahrmotor 10 ist dabei über eine Elektronikeinheit 11, welche insbesondere einen Umrichter und leistungselektronische Komponenten umfassen soll, mit einem elektrischen Speicher 12 verbunden. Der an sich bekannte Antrieb des Omnibus 1 über den Hybridantrieb erfolgt nun so, dass der Dieselmotor 6 zumindest einen Teil der zum Fahren des Omnibus 1 benötigten Leistung zur Verfügung stellt. In Situationen, in denen mehr Leistung benötigt wird, beispielsweise beim Anfahren oder Beschleunigen, kann außerdem elektrische Leistung über den elektrischen Antriebsmotor 10 zugeführt werden. Kommt es nun zu einem Abbremsen des Omnibus 1, so kann der elektrische Motor 10 generatorisch betrieben werden. Über die Elektronikeinheit 11 kann ein vorgegebener Strom aus dem elektrischen Motor 10 gezogen werden, wodurch sich in dem elektrischen Motor 10 ein vorgegebenes Schleppmoment einstellt, welches den Omnibus 1 abbremst. Die so beim Abbremsen des Omnibus 1 zurückgewonnene elektrische Energie wird dann in dem elektrischen Speicher 12 gespeichert.

Insbesondere beim Einsatz eines solchen Hybridantriebs in vergleichsweisen schweren Nutzfahrzeugen und Omnibussen können bei der Rückgewinnung von Bremsenergie, der sogenannten Rekuperation, sehr hohe Ströme auftreten. Um diese in dem elektrischen Speicher 12 speichern zu können, muss hier ein Speicher gewählt werden, welcher vergleichsweise geringe Innenwiderstände aufweist, und so den größten Teil des Stroms einspeichert, anstatt ihn in Wärme umzusetzen. Der elektrische Speicher 12 ist daher aus elektrischen Speichermodulen 13, welche in den nachfolgenden Figuren noch zu erkennen sind, aufgebaut, welche ihrerseits aus Hochleistungskondensatoren, sogenannten Supercaps, aufgebaut sind. Der elektrische Speicher 12 soll dabei mit der Elektronikeinheit 11, also dem Umrichter und der Leistungselektronik, in dem später noch näher beschriebenen Dachmodul 3 angeordnet sein, was in der Darstellung der Figur 2 durch eine strichpunktierte Linie dargestellt ist. Neben diesen Komponenten kann der Omnibus 1 außerdem über eine hier nur prinzipmäßig angedeutete Klimatisierungsanlage 14 verfügen, welche beispielsweise mittelbar von dem Dieselmotor 6 angetrieben, zur Bereitstellung von abgekühlter Luft, insbesondere für den Innenraum des Omnibus 1, ausgebildet ist.

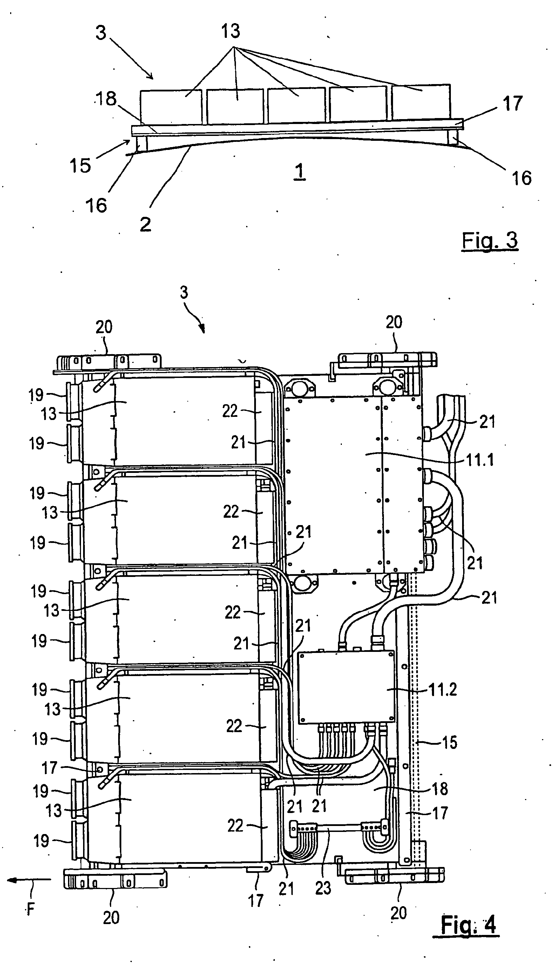

Wie bereits bei der Beschreibung der Figur 1 angedeutet, soll das Dachmodul 3 über eine beliebige, typischerweise vom Hersteller des Omnibus vorgegebene Abdeckhaube 4 abdeckbar sein, welche in der Darstellung in der Figur 1 prinzipmäßig angedeutet ist. Unter dieser Abdeckhaube 4 befindet sich nun der in Figur 3 dargestellte funktionale Aufbau des Dachmoduls 3, welcher aus dem elektrischen Speicher 12 in Form von elektrischen Speichermodulen 13 sowie der - hier verdeckten - Elektronikeinheit 11 in Form eines Umrichters 11.1 und einer Leistungselektronik 11.2 verfügt. Der Aufbau des Dachmoduls 3 ist dabei auf einem Tragrahmen 15 angeordnet, welcher in der Frontansicht der Figur 3 zu erkennen ist. In dieser Ansicht sind zwei Längsstreben 16 zu erkennen, welche in Fahrtrichtung F verlaufen und auf dem Fahrzeugdach 2 angebracht sind. Außerdem weist der Tragrahmen 15 wenigstens eine, typischerweise jedoch mehrere Querstreben 17 auf, von welchen hier eine zu erkennen ist. Diese Querstrebe 17 ist dabei so auf den Längsstreben 16 angeordnet, dass eine Wölbung des Fahrzeugdachs 1 unterhalb des Dachmoduls 3 auftreten kann, ohne dass es zu einer Berührung mit dem Dachmodul 3 kommt.

Auf den beziehungsweise der Querstrebe(n)17 sind in dem hier dargestellten Fall fünf Speichermodule 13 zu erkennen. Diese Speichermodule 13 sind ihrerseits jeweils aus mehreren Hochleistungskondensatoren beziehungsweise Supercaps ausgebildet. Sie sind auf dem Tragrahmen 15 fixiert und können so zusammen mit der Elektronikeinheit 11 und dem Tragrahmen 15 als elektrischer Speicher 12 auf dem Fahrzeugdach 2 montiert werden. Im Bereich des Tragrahmens 15, und hier insbesondere auf den beiden Längsstreben 16, ist ein Abschirmblech 18 angeordnet. Dieses Abschirmblech 18 ist dabei als verzinktes Blech ausgebildet und überdeckt die gesamte Grundfläche des Tragrahmens 15, ohne selbst tragende Eigenschaften aufzuweisen. Es ist, wie für Abschirmbleche 18 üblich, mit den Masseleitungen beziehungsweise dem Massepol der Elektronikkomponenten, also der elektrischen Energiespeichermodule 13 und dem Umrichter 11.1 sowie der Leistungselektronik 11.2, verbunden. Dieser Aufbau ist in der Draufsicht auf das Dachmodul in Figur 4 nochmals besser zu erkennen. Außerdem sind hier in Richtung der Fahrtrichtung F vorne jeweils zwei Lüfter 19 an den elektrischen Energiespeichermodulen zu erkennen. Diese können bei Bedarf eingeschaltet werden, um die elektrischen Energiespeichermodule 13 zu kühlen. Ansonsten erfolgt die Kühlung zumindest teilweise durch die anströmende und in den Bereich des Dachmoduls 3, beispielsweise über die im Rahmen der Figur 1 bereits beschriebenen Lüftungsschlitze 5, eindringenden Fahrtwind.

Das Dachmodul 3 selbst wird dabei als selbsttragende vormontierte Einheit hergestellt. Insbesondere im Bereich der Längsträger 16 können entsprechende Aufnahmeelemente oder Aufnahmepunkte 20 vorgesehen sein, wie sie in der Darstellung der Figur 4 zu erkennen sind. Diese Aufnahmeelemente 20 können unabhängig von Bauart und Größe der Komponenten in dem Dachmodul 3 dabei bei konstanter Breite des Tragrahmens 15 so abgestimmt sein, dass sie auf verschiedene Fahrzeugdächer 2 von verschiedenen Fahrzeugen 1, beispielsweise verschiedenen Serien von Omnibussen eines Herstellers, entsprechend passen und dort Lagerungselemente zu ihrer Befestigung vorfinden. Das fertig vormontierte und dann auf dem Fahrzeugdach 2 aufgebrachte Dachmodul 3 kann abschließend mit der lediglich in Figur 1 dargestellten Abdeckhaube abgedeckt werden. Diese ist für die Funktionalität jedoch nicht entscheidend, sondern primär hinsichtlich der Optik und des Luftwiderstands von Bedeutung.

Wie in der Draufsicht der Figur 4 zu erkennen ist, weist das Dachmodul 3 zahlreiche elektrische Leitungselemente auf, von welchen hier nur einige beispielhaft mit dem Bezugszeichen 21 versehen sind. Die elektrischen Leitungselemente sind dabei zwischen dem Umrichter 11.1 und der Leistungselektronik 11.2 ebenso wie zwischen der Leistungselektronik 11.2 und den einzelnen elektrischen Energiespeichermodulen 13 jeweils so geführt, dass die Hinleitung und die Rückleitung jeweils sehr dicht beieinander liegt. Im Bereich der elektrischen Energiespeichermodule 13 erfolgt dies teilweise so, dass die Leitungen 21 entlang von Elektronikboxen 22 an einem Ende des elektrischen Energiespeichermoduls 13 verlaufen, wobei dann im Inneren des Elektronikmoduls 22 die entsprechende Rückleitung zu der außen am Modul verlaufenden Vorleitung angeordnet ist. Dieser Aufbau mit sehr dicht beieinander liegenden elektrischen Hin- und Rückleitungen ermöglicht es zusammen mit dem verzinkten Abschirmblech 18, welches im Bereich eines Massenanschlusses 23 mit den Masseleitungen verbunden ist, und welches unterhalb der Komponenten des Dachmoduls 3 im Bereich des Tragrahmens 15 angeordnet ist, dass die Komponenten des Dachmoduls 3 elektromagnetisch sehr gut gegenüber dem Fahrzeug 1 und darin befindlicher Elektronik beziehungsweise im Falle eines Omnibus auch den darin befindlichen Personen entsprechend abgeschirmt sind. Der Aufbau ermöglicht so eine gute Kühlung der Elektronikkomponenten bei gleichzeitig guter Abschirmung und hoher Flexibilität des Dachmoduls 3, beispielsweise für verschiedene Fahrzeuge.

## Patentansprüche

1. Dachmodul (3)
1.1 zur Montage auf einem Fahrzeugdach (2) eines Fahrzeugs, mit
1.2 einem selbsttragenden Tragrahmen (15) auf welchem Komponenten montiert sind,
1.3 der Tragrahmen (15) unabhängig vom Fahrzeugdach (2) ausgebildet ist,
1.4 die Komponenten zumindest elektrische Energiespeichermodule (13) umfassen,
**dadurch gekennzeichnet, dass**
1.5 zwischen den elektrischen Energiespeichermodulen (13) und dem Fahrzeugdach (2) ein Abschirmblech (18) an dem Tragrahmen (15) angeordnet ist.

2. Dachmodul nach Anspruch 1,
**dadurch gekennzeichnet, dass** das Abschirmblech (18) auf der dem Fahrzeugdach (2) abgewandten Seite eines mit dem Fahrzeugdach (2) verbundenen Teils (16) des Tragrahmens (15) angeordnet ist.

3. Dachmodul nach Anspruch 1 oder 2,
**dadurch gekennzeichnet, dass** der Tragrahmen (15) zwei Längsstreben (16) und wenigstens eine Querstrebe (17) aufweist.

4. Dachmodul nach einem der Ansprüche 1, 2 oder 3,
**dadurch gekennzeichnet, dass** die elektrischen Energiespeichermodule (13) aus Hochleistungskondensatoren aufgebaut sind.

5. Dachmodul nach einem der Ansprüche 1 bis 4,
**dadurch gekennzeichnet, dass** die elektrischen Energiespeichermodule (13) in Fahrtrichtung (F) vorne angeordnet sind.

6. Dachmodul nach einem der Ansprüche 1 bis 5, **dadurch gekennzeichnet, dass** die Komponenten ferner wenigstens einen Umrichter (11.1) und eine Leistungselektronik (11.2) umfassen.

7. Dachmodul nach einem der Ansprüche 1 bis 6, **dadurch gekennzeichnet, dass** es einen elektrischen Speicher (12) für einen Hybridantrieb des Fahrzeugs (1) umfasst.

8. Dachmodul nach einem der Ansprüche 1 bis 7, **dadurch gekennzeichnet, dass** elektrische Leitungselemente (21) zu und von den Komponenten (13, 11) jeweils dicht nebeneinander angeordnet sind.

9. Dachmodul nach einem der Ansprüche 1 bis 8, **dadurch gekennzeichnet, dass** die elektrischen Energiespeichermodule (13) Lüfter (19) aufweisen.

10. Dachmodul nach einem der Ansprüche 1 bis 9, **dadurch gekennzeichnet, dass** dem Bereich in Fahrtrichtung (F) des Fahrzeugs (1) vor den elektrischen Energiespeichermodulen (13) über eine Klimatisierungsanlage (14) abgekühlte Luft zuführbar ist.

11. Dachmodul nach einem der Ansprüche 1 bis 10, **dadurch gekennzeichnet, dass** es mit einer Abdeckhaube (4) verschließbar ist.

12. Dachmodul nach einem der Ansprüche 1 bis 11, **dadurch gekennzeichnet, dass** das Fahrzeug (1) als Nutzfahrzeug, insbesondere als Omnibus, ausgebildet ist.

## Claims

1. A roof module
1.1 for mounting on a roof of a vehicle, comprising
1.2 a self-supporting support frame on which components are mounted;
1.3 the support frame (15) is arranged independently of the vehicle roof (2);
1.4 the components comprise at least one electric energy storage module (13), **characterized in that**
1.5 a shielding plate (18) is arranged on the support frame (15) between the electric energy storage modules (13) and the vehicle roof (2).

2. A roof module according to claim 1, **characterized in that** the shielding plate (18) is arranged on the side of a part (16) of the support frame (15) connected with the vehicle roof (2), which side faces way from the vehicle roof (2).

3. A roof module according to claim 1 or 2, **characterized in that** the support frame (15) comprises two longitudinal struts (16) and at least one transverse strut (17).

4. A roof module according to one of the claims 1, 2 or 3, **characterized in that** the electric energy storage modules (13) are made up of high-performance capacitors.

5. A roof module according to one of the claims claim 1 to 4, **characterized in that** the electric energy storage modules (13) are arranged at the front in the direction of travel (F).

6. A roof module according to one of the claims 1 to 5, **characterized in that** the components further comprise at least one converter (11.1) and power electronics (11.2).

7. A roof module according to one of the claims 1 to 6, **characterized in that** it comprises an electric storage unit (12) for a hybrid drive of the vehicle (1).

8. A roof module according to one of the claims 1 to 7, **characterized in that** the electric line elements (21) leading to and from the components (13, 11) are each arranged close to one another.

9. A roof module according to one of the claims 1 to 8, **characterized in that** the electric energy storage modules (13) comprise fans (19).

10. A roof module according to one of the claims 1 to 9, **characterized in that** cooled air can be supplied via an air-conditioning system (14) to the region before the electric energy storage modules (13) in the direction of travel (F) of the vehicle (1).

11. A roof module according to one of the claims 1 to 10, **characterized in that** it can be sealed with a covering hood (4).

12. A roof module according to one of the claims 1 to 11, **characterized in that** the vehicle (1) is arranged as a commercial vehicle, especially an omnibus.

## Revendications

1. Module de toit (3)
1.1 pour montage sur un toit (2) de véhicule, avec
1.2 un cadre porteur autoportant (15) sur lequel sont installés des composants,
1.3 le cadre porteur (15) est constitué de manière indépendante du toit de véhicule (2),
1.4 les composants comprennent au moins des dispositifs de stockage d'énergie électriques (13),
**caractérisé en ce que**
1.5 une tôle de protection (18) est disposée sur le cadre porteur (15) entre les dispositifs de stockage d'énergie électriques (13) et le toit de véhicule (2).

2. Module de toit selon la revendication 1, **caractérisé en ce que** la tôle de protection (16) est disposée sur le côté opposé au toit de véhicule (2), côté d'une partie (16) du cadre porteur (15) reliée au toit de véhicule (2).

3. Module de toit selon la revendication 1 ou 2, **caractérisé en ce que** le cadre porteur (15) présente deux longerons longitudinaux (16) et au moins un longeron transversal (17).

4. Module de toit selon l'une quelconque des revendications 1, 2 ou 3, **caractérisé en ce que** les dispositifs de stockage d'énergie électriques (13) sont constitués de condensateurs haute puissance.

5. Module de toit selon l'une quelconque des revendications 1 à 4, **caractérisé en ce que** les dispositifs de stockage d'énergie électriques (13) sont disposés à l'avant dans le sens de la marche (F).

6. Module de toit selon l'une quelconque des revendications 1 à 5, **caractérisé en ce que** les composants comprennent de plus au moins un redresseur (11.1) et une électronique de puissance (11.2).

7. Module de toit selon l'une quelconque des revendications 1 à 6, **caractérisé en ce qu'**il comprend un dispositif de stockage électrique (12) pour un entraînement hybride du véhicule (1).

8. Module de toit selon l'une quelconque des revendications 1 à 7, **caractérisé en ce que** des éléments de conduite électriques (21) sont serrés les uns contre les autres en se rapprochant et en s'écartant respectivement des composants.

9. Module de toit selon l'une quelconque des revendications 1 à 8, **caractérisé en ce que** les dispositifs de stockage d'énergie électriques (13) présentent des ventilateurs (19).

10. Module de toit selon l'une quelconque des revendications 1 à 9, **caractérisé en ce que** de l'air refroidi peut être acheminé à la zone du véhicule (1) située devant les dispositifs de stockage d'énergie électriques (13) dans le sens de la marche par le biais d'une climatisation (14).

11. Module de toit selon l'une quelconque des revendications 1 à 10, **caractérisé en ce que** l'on peut le rendre hermétique par une couverture de protection (4).

12. Module de toit selon l'une quelconque des revendications 1 à 11, **caractérisé en ce que** le véhicule (1) est conçu comme véhicule utilitaire, en particulier comme omnibus.
